# EUROPÄISCHE PATENTSCHRIFT

(11) **EP 2 318 326 B1**
(45) Veröffentlichungstag und Bekanntmachung des Hinweises auf die Patenterteilung: **16.10.2013**
(21) Anmeldenummer: 09781664.9
(22) Anmeldetag: 10.08.2009
(51) Int. Cl.: C04B 40/00, C08L 61/04, C04B 24/22, C04B 28/02, C08G 8/04

(54) **VERWENDUNG VON ALDEHYD-KONDENSATEN ALS TROCKNUNGSHILFSMITTEL IN ZUBEREITUNGEN AUF BASIS MINERALISCHER BINDEMITTEL**
USE OF ALDEHYDE CONDENSATES AS DRYING AIDS IN PREPARATIONS BASED ON MINERAL BINDERS
UTILISATION DE PRODUITS DE CONDENSATION D'UN ALDÉHYDE EN TANT QU'AUXILIAIRES DE SÉCHAGE DANS DES PRÉPARATIONS À BASE DE LIANTS MINÉRAUX

(30) Priorität: 15.08.2008 EP 08162459
(43) Veröffentlichungstag der Anmeldung: 11.05.2011
(73) Patentinhaber: BASF SE, 67056 Ludwigshafen (DE)
(72) Erfinder: GARNIER, Sebastien, 69469 Weinheim (DE); NAUNDORF, Corinna, 68259 Mannheim (DE); DIETRICH, Ulf, 67056 Ludwigshafen (DE)
(86) Internationale Anmeldenummer: PCT/EP2009/060334
(87) Internationale Veröffentlichungsnummer: WO 2010/018150

(56) Entgegenhaltungen:
- WO-A1-03/097721
- WO-A1-2005/080478
- DE-A1- 19 707 746

## Beschreibung

Die vorliegende Erfindung betrifft die Verwendung von C₂-C₆ Mono- und/oder Dialdehyd-Kondensationsprodukten mit sulfonierten Phenolen, sulfonierten Naphthalinen, und anderen sulfonierten mehrkernigen Aromaten als Trocknungshilfsmittel, insbesondere bei der Sprühtrocknung wäßriger Polymerisatdispersionen für mineralische Baustoffe wie Gips, Zement oder Mörtel.

Weiterhin betrifft die vorliegende Erfindung mineralische Baustoffe enthaltend die erfindungsgemäßen Aldehyd-Kondensationsprodukte.

Wässrige Polymerisatdispersionen finden breite Anwendung, beispielsweise als Bindemittel, insbesondere für Kunstharzputze oder hochpigmentierte Innenfarben, Klebstoffe, Beton, Mörtel oder Beschichtungsmittel. Häufig ist es jedoch erwünscht, nicht die wässrige Polymerisatdispersion, sondern das Polymerisat in Pulverform einzusetzen.

Um das Polymerisat in Pulverform zu erhalten, muß die Dispersion einem Trocknungsvorgang unterzogen werden, beispielsweise einer Sprühtrocknung oder auch einer Gefriertrocknung. Bei der Sprühtrocknung wird die Polymerisatdispersion in einem Warmluftstrom versprüht und entwässert, wobei die Trockenluft und die versprühte Dispersion vorzugsweise im Gleichstrom durch den Trockner geführt werden.

Das erhaltene Polymerisatpulver hat jedoch den Nachteil, dass seine Redispergierbarkeit in wässrigem Medium im allgemeinen nicht voll zu befriedigen vermag, weil die bei der Redispergierung resultierende Polymerisatteilchen-Durchmesserverteilung in der Regel von derjenigen in der wässrigen Ausgangsdispersion verschieden ist. Der Grund dafür liegt darin, dass wässrige Polymerisatdispersionen im Unterschied zu Polymerisatlösungen keine thermodynamisch stabilen Systeme bilden. Vielmehr versucht das System, die Grenzfläche Polymerisat/Dispergiermedium durch Vereinigung von kleinen Primärteilchen zu größeren Sekundärteilchen (Stippen, Koagulat) zu verkleinern. Dies kann im Zustand der dispersen Verteilung im wässrigem Medium durch Zusatz von Dispergiermitteln, wie Emulgatoren und Schutzkolloiden auch für längere Zeit verhindert werden. Bei der Trocknung wässriger Polymerisatdispersionen reicht nun aber die Wirkung der Dispergiermittel häufig nicht mehr aus und es kommt in bestimmtem Umfang zu irreversibler Sekundärteilchenbildung. Das heißt, die Sekundärteilchen bleiben bei der Redispergierung erhalten und mindern die anwendungstechnischen Eigenschaften der im Rahmen der Redispergierung erhältlichen wässrigen Polymerisatdispersion.

Um die Sekundärteilchenbildung beim Trocknen zu verhindern oder zumindest zu reduzieren, ist es seit längerem bekannt, so genannte Trocknungshilfsmittel einzusetzen. Diese werden vielfach als Sprühhilfsmittel bezeichnet, da die Sprühtrocknung die Bildung irreversibel agglomerierter Sekundärteilchen besonders fördert. Dieser Effekt ist um so ausgeprägter, je niedriger die Glasübergangstemperatur (und damit die Erweichungstemperatur oder die Mindestfilmbildetemperatur) der Polymerteilchen ist, insbesondere dann, wenn sie unterhalb der Trocknungstemperatur liegt. Gleichzeitig mindern Trocknungshilfsmittel in der Regel die Ausbildung von an der Trocknerwand haftenbleibendem Polymerbelag und bewirken so eine Erhöhung der Pulverausbeute.

Die Verwendung von Trocknungshilfsmitteln ist aus zahlreichen Publikationen bekannt. So beschreibt die DE-A-24 45 813 ein in wäßrigen Systemen redispergierbares pulverförmiges Polymer, das als Trocknungshilfsmittel 1 bis 20 Gew.-% eines wasserlöslichen, sulfonsäure- oder sulfonatgruppenhaltigen Kondensationsproduktes aus aromatischen Kohlenwasserstoffen und Formaldehyd enthält. Bei diesen Kondensationsprodukten handelt es sich insbesondere um Phenolsulfonsäure- oder Naphthalinsulfonsäure-Formaldehyd-Kondensate.

Die EP-A 078 449 beschreibt ein Verfahren zur Herstellung von blockfesten, in Wasser redispergierbaren Polymerisatpulvern durch Sprühtrocknung von wäßrigen Dispersionen von Polymerisaten mit Glasübergangstemperaturen unterhalb 50°C. Die Dispersionen enthalten als Sprühhilfsmittel ein wasserlösliches Copolymerisat aus Vinylpyrrolidon und Vinylacetat und/oder ein wasserlösliches Alkali- und/oder Erdalkalisalz eines Naphthalinsulfonsäure-Formaldehyd-Kondensationsproduktes.

In ähnlicher Weise beschreibt die EP-A 407 889 die Verwendung eines wasserlöslichen Alkali- oder Erdalkalisalzes eines Phenolsulfonsäure-Formaldehyd-Kondensationsproduktes als Sprühhilfsmittel zur Herstellung von in Wasser redispergierbaren Polymerisatpulvern aus wäßrigen Polymerisatdispersionen.

WO 2005/021145 offenbart die Verwendung von o-Kresol-Sulfonsäure-Formaldehyd-Kondensaten als Dispergierhilfsmittel.

Nachteilig an den im Stand der Technik offenbarten Sprühhilfsmitteln ist zum einen die Verwendung von Formaldehyd und zum anderen die bei der Verwendung von Phenolsulfonsäure-Formaldehyd-Kondensaten auftretende Färbung der sprühgetrockneten Pulver.

Der vorliegenden Erfindung liegt die Aufgabe zugrunde, Trocknungshilfsmittel für die Verwendung in mineralischen Baustoffen zur Verfügung zu stellen, die es erlauben, aus Polymerisatdispersionen Polymerpulver herzustellen, die in Wasser gut redispergierbar sind und die die Nachteile des Standes der Technik nicht aufweisen.

Überraschenderweise wurde gefunden, dass diese Aufgabe gelöst wird, wenn man C₂-C₆ Aldehyd-Kondensationsprodukte mit sulfonierten Aromaten verwendet. Zusätzlich zeigen die C₂-C₆ Aldehyd-Kondensationsprodukte eine geringere Verzögerung bei der Hydratation von Zement.

Gegenstand der vorliegenden Erfindung ist daher die Verwendung von C₂-C₆ Aldehyd-Kondensationsprodukten als Hilfsmittel bei der Trocknung wässriger Polymerisatdispersionen in mineralischen Baustoffen.

Die Herstellung der erfindungsgemäß zur Anwendung kommenden Trocknungshilfsmittel erfolgt in der Regel durch Kondensation der C₂ -C₆ Aldehyde mit sulfonierten Phenolen, sulfonierten Naphthalinen oder anderen sulfonierten mehrkernigen Aromten unter sauren, insbesondere schwefelsauren Reaktionsbedingungen. Unter Phenolen versteht man zum Beispiel Phenol, ortho-Kresol, meta-Kresol, para-Kresol, 2-Ethylphenol, 3-Ethylphenol, 4-Ethylphenol, 2,3-Dimethylphenol, 2,4-Dimethylphenol, 2,5-Dimethylphenol, 2,6-Dimethylphenol, 3,4-Dimethylphenol, 3,5-Dimethylphenol, 3,4,5 Trihydroxybenzoesäure; unter Naphthalinen versteht man solche, die unsubstituiert, monosubstituiert und mehrfach substituiert sein können. Sofern ein oder mehrere Substituenten vorhanden sind, werden diese unabhängig voneinander gewählt aus zum Beispiel C₁-C₁₀-Alkylgruppen wie beispielsweise Methyl, Ethyl, n-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylexyl, n-Nonyl, n-Decyl oder aus anderen Gruppen wie Hydroxy-, Methoxy-, Ethoxy-, Amin-, Dimethylamin, Ethylmethylamin-, Diethylamin-. Verwandete Verbindungen können zum Beispiel Benzol, Toluol, ortho-Xylol, meta-Xylol, para-Xylol, Ethylbenzol, Cumol, para-Methylcumol, Biphenyl, 2-Methylbiphenyl, 3-Methylbiphenyl, 4-Methylbiphenyl, para-Terphenyl, Inden, Fluoren, Phenanthren, Anthracen, 9-Methylanthracen, 9-Phenyl-anthracen sein. Dabei können die sulfonierten Phenole, sulfonierten Naphthaline oder andere sulfonierte mehrkernige Aromaten vorgelegt oder in situ nach bekannten Methoden (vgl. J. March, Advanced Organic Chemistry, 3rd ed, John Wiley, New York 1985, S. 473 ff. und dort zitierte Literatur) hergestellt werden. Vorzugsweise wird beispielsweise Phenolsulfonsäure oder Naphthalinsulfonsäure in situ durch Sulfonierung mit Schwefelsäure, vorzugsweise konzentrierter Schwefelsäure, hergestellt. Die Kondensation erfolgt durch Umsetzung der sulfonierten Phenole oder sulfonierten Naphthaline oder anderen sulfonierten mehrkernigen Aromaten mit den C₂-C₆ Aldehyden unter sauren Reaktionsbedingungen, vorzugsweise unter schwefelsauren Reaktionsbedingungen, insbesondere in konzentrierter Schwefelsäure. Wird beispielsweise die Phenolsulfonsäure oder Naphthalinsulfonsäure in situ hergestellt, leitet man die Kondensation durch Zugabe der C₂-C₆ Aldehyde zum schwefelsauren Reaktionsgemisch ein. Das molare Verhältnis Aldehyd:Phenolsulfonsäure liegt im Bereich von 1:1 bis 1:2, vorzugsweise im Bereich von 1:1,3 bis 1:1,7. Vorzugsweise wird das C₂-C₆ Aldehyd als wässrige Lösung zugegeben. Um das gewünschte Molekulargewicht einzustellen, wird die Kondensationsreaktion in der Regel bei Temperaturen im Bereich von 90 bis 110°C, vorzugsweise bei etwa 100°C durchgeführt. Die Reaktionsdauer beträgt in der Regel 2 bis 6 h, vorzugsweise 3 bis 5 h. Werden die Salze als Trocknungshilfsmittel gewünscht, wird im Anschluss an die Kondensation eine Neutralisation mit einem geeigneten basischen Metallsalz oder einem Amin durchgeführt, wobei sowohl Metallsalz oder Amin vorzugsweise als wässrige Lösung oder Dispersion verwendet werden.

Die zur Anwendung kommende Menge an Trocknungshilfsmitteln beträgt vorzugsweise 1 bis 30 Gew.-%, bezogen auf das Gewicht des Polymerisates der Dispersion, vorzugsweise 3 bis 15 Gew.-% und besonders bevorzugt 5 bis 12 Gew.-%.

Besonders vorteilhaft sind die erfindungsgemäßen Verbindungen zur Trocknung von Polymerisatdispersionen, bei denen das Polymerisat eine Glasübergangstemperatur (DSC, midpoint temperature, ASTM D 3418-82) von +115 °C bis -60°C, vorzugsweise ≤65°C, besonders bevorzugt ≤50°C, insbesonders besonders bevorzugt ≤25°C und ganz besonders bevorzugt ≤0°C aufweist. Im allgemeinen ist die Glasübergangstemperatur der Polymerisate ≥-60°C, vorzugsweise ≥-40°C und insbesondere ≥-20°C.

Dabei ist es oft hilfreich, die Glasübergangstemperatur T_{g} des dispergierten Polymerisats abzuschätzen (Fox (T.G. Fox, Bull. Am. Phys. Soc. (Ser. II) 1, 123 [1956] und Ullmanns Encyklopädie der technischen Chemie, Weinheim (1980), S. 17, 18).

Vorteilhaft werden Aldehyd-Kondensaten mit einem zahlenmittleren Molekulargewicht Mₙ < 1500 Dalton als Trocknungshilfsmittel verwendet.

Gegenstand der vorliegenden Erfindung ist daher die Verwendung von Aldehyd-Kondensaten mit einem zahlenmittleren Molekulargewicht Mₙ < 1500 Dalton oder deren Salzen als Hilfsmittel bei der Trocknung wässriger Polymerisatdispersionen.

Vorzugsweise weisen die Kondensationsprodukte mittlere Molekulargewichte Mₙ im Bereich von 500 bis 1500 Dalton, insbesondere 600 bis 1200 Dalton auf, bestimmt mittels Gelpermeationschromatographie wie in den Beispielen bei der Herstellung der Sprühhilfsmittel beschrieben. Die Uneinheitlichkeit (definiert als M_{w}/Mₙ) liegt im Bereich von 5 bis 15, vorzugsweise im Bereich von 5 bis 11. Der Anteil an Kondensaten mit Molmassen oberhalb 10.000 Dalton macht vorzugsweise weniger als 25 Gew.-%, insbesondere weniger als 20 Gew.-% des gesamten Kondensationsprodukts aus.

Wird das Kondensationsprodukt in Form seiner Salze eingesetzt, verwendet man in der Regel Alkali- oder Erdalkalimetallsalze oder Ammoniumsalze, d.h. Salze mit Ammoniak oder organischen Aminen wie Triethanolamin, Diethanolamin oder Triethylamin. Bevorzugt werden die Erdalkalimetallsalze und insbesondere die Calciumsalze.

Vorzugsweise handelt es sich bei den zu trocknenden Polymerisaten, um Polymerisate, die
(a) 80 bis 100 Gew.-% wenigstens eines Monomers, das ausgewählt ist unter vinylaromatischen Verbindungen, Estern aus α,β-monoethylenisch ungesättigten C₃-C₆-Carbonsäuren und C₁-C₁₂-Alkanolen, vorzugsweise C₁-C₈-Alkanolen, Vinyl- und Allylestern von C₁-C₁₅-Carbonsäuren und Butadien, und
(b) 0 bis 20 Gew.-% wenigstens eines sonstigen Monomers, das wenigstens eine ethylenisch ungesättigte Gruppe aufweist,
enthalten.

Hierbei beziehen sich die Ausdrücke Cₙ-Cₘ auf die im Rahmen der Erfindung mögliche Anzahl der Kohlenstoffe einer jeweiligen Verbindungsklasse. Alkylgruppen können linear oder verzweigt sein. Cₙ-Cₘ-Alkylaryl steht für Arylgruppen die einen Cₙ-Cₘ-Alkylrest tragen.

Beispiele für vinylaromatische Verbindungen sind Styrol, α-Methylstyrol oder Vinyltoluole, wie o-Vinyltoluol.

Bei den Estern von α,β-monoethylenisch ungesättigten Carbonsäuren handelt es sich insbesondere um Ester der Acrylsäure, Methacrylsäure, Maleinsäure, Fumarsäure oder Itaconsäure. Beispiele für solche Ester sind Methyl(meth)acrylat, Ethyl(meth)acrylat, n-Butyl(meth)acrylat, iso-Butyl(meth)acrylat, t-Butyl(meth)acrylat, Ethylhexyl(meth)acrylat, Decyl(meth)acrylat oder Dodecyl-(meth)acrylat.

Brauchbare Vinyl- und Alkylester sind Vinylacetat, Vinylpropionat, Vinyl-n-butyrat, Vinyllaurat und Vinylversatate sowie die entsprechenden Allylester.

Besonders bevorzugte Monomere (a) sind n-Butylacrylat, 2-Ethylhexylacrylat, Methylmethacrylat und Styrol.

Bei den Monomeren (b) handelt es sich vorzugsweise um die oben genannten α,β - monoethylenisch ungesättigten C₃-C₆-Carbonsäuren und die entsprechenden Nitrile, Amide, Mono- oder Dialkylamide und Hydroxyalkylester davon. Geeignet sind auch die N-Vinylderivate von cyclischen Lactamen und die Mono- oder Dialkylaminoalkylamide der erwähnten C₃-C₆-Carbonsäuren und deren Quaternisierungsprodukte wie zum Beispiel Trialkylammoniumalkyl(meth)acrylate und Trialkylammoniumalkyl(meth)acrylamide.

Besonders bevorzugte Monomere (b) sind Acrylamid, Methacrylamid, Acrylsäure, Methacrylsäure, Acrylnitril, Methacrylnitril, 2-Acrylamido-2-methylpropansulfonsäure, Vinylpyrrolidon, Hydroxyethylacrylat, Hydroxyethylmethacrylat, Hydroxypropylacrylat, Hydroxypropylmethacrylat, quarternisiertes Vinylimidazol, N,N-Dialkylaminoalkyl(meth)acrylate, N,N-Dialkylaminoalkyl(meth)acrylamide, Trialkylammoniumalkyl(meth)acrylate und Trialkylammoniumalkyl(meth)acrylamide.

Bevorzugte Polymerisatdispersionen sind weiterhin solche, bei denen der gewichtsmittlere Durchmesser d_{w} der dispergierten Polymerisatpartikel ≥100 nm und besonders bevorzugt ≥ 300 nm ist. Üblicherweise beträgt d_{w} ≤2000 nm. Es ist ferner günstig, wenn die Durchmesser der dispergierten Polymerisatpartikel über einen breiten Durchmesserbereich verteilt sind.

Der d_{w}-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wird. Die Ultrazentrifugenmessung liefert die integrale Massenverteilung des Teilchendurchmessers einer Probe. Hieraus lässt sich entnehmen, wie viele Gewichtsprozent der Teilchen einen Durchmesser gleich oder unter einer bestimmten Größe haben.

Ein geeignetes Maß zur Charakterisierung der Breite der Durchmesserverteilung ist der Quotient Q = (d₉₀-d₁₀)/d₅₀, wobei dₘ der Durchmesser ist, der von m Gew.-% der dispergierten Polymerisatpartikel nicht überschritten wird. Vorzugsweise beträgt Q 0,5 bis 1,5. Die Herstellung von Polymerisatdispersionen mit einer derartigen Teilchenverteilungsbreite ist dem Fachmann bekannt, z.B. aus der DE-A 43 07 683.

Das Verhältnis von gewichtsmittlerem Molekulargewicht M_{w} zu zahlenmittlerem Molekulargewicht Mₙ der Polymerisate kann 1 bis 30 bzw. 1 bis 20 oder 1 bis 8 betragen. Das Molekulargewicht kann somit im wesentlichen einheitlich oder über eine gewisse Breite verteilt sein.

Die Herstellung der zu trocknenden Polymerisatdispersionen ist bekannt. Im allgemeinen erfolgt sie durch radikalische Polymerisation, die vorzugsweise in polaren Lösungsmitteln, insbesondere in Wasser durchgeführt wird. Zur Einstellung des gewünschten Molekulargewichtes können das Molekulargewicht regelnde Substanzen mitverwendet werden. Geeignete Molekulargewichtsregler sind z.B. Verbindungen, die eine Thiolgruppe und/oder eine Silangruppe aufweisen (z.B. t-Dodecyl-, n-Dodecylmercaptan oder Mercaptopropyltrimethoxysilan), Allylalkohole oder Aldehyde, wie Acetaldehyd etc.

Geeignete Starter sind z.B. organische oder anorganische Peroxide, wie Kalium-, Natrium- oder Ammoniumperoxodisulfat oder wasser- und monornerlösliche Azoverbindungen wie Azobisisobutyronitril, Azobiscyanovaleriansäure sowie 2,2' Azobis (2-methylpropion-amidin) dihydrochlorid, Redoxinitaitorsysteme bestehend aus einem Oxidationsmittel wie Wasserstoffperoxid, t-Butylhydroperoxid, t-Butylperoxid und einem Reduktionsmittel wie beispielsweise Kalium-, Natrium-, Ammoniumsulfit und -bisulfit sowie Ascorbinsäure, wobei auch Oxidationsmittel alleine verwendet werden können, welche mittels thermischer Zersetzung freie Radikale bilden können, sowie katalytische Initiatorsysteme wie beispielsweise das System H₂O₂/Fe²⁺/H⁺. Der Anteil an Initiatoren, bezogen auf den Monomeranteil, liegt bevorzugt zwischen 0,01 und 5 Gew.-%, insbesondere zwischen 0,1 und 3 Gew.-%. Die Polymerisation kann je nach Monomerenzusammensetzung als Lösungs- oder Emulsionspolymerisation erfolgen.

Falls die Polymerisatdispersion durch Emulsionspolymerisation hergestellt wird, erfolgt dies in üblicher Weise. Im allgemeinen verwendet man ein Schutzkolloid, wie Polyvinylalkohol, Polyvinylpyrrolidon oder Cellulosederivate oder anionische und/oder nichtionische Emulgatoren, wie ethoxylierte Mono-, Di- oder Trialkylphenole, ethoxylierte Fettalkohole und Alkali- oder Ammoniumsalze von C₈-C₁₂-Alkylsulfaten, Schwefelsäurehalbestern ethoxylierter C₁₂-C₁₈-Alkanole, C₁₂-C₁₈-Alkylsulfonsäuren, C₉-C₁₈-Alkylarylsulfonsäuren und sulfonierten Alkyldiphenylethern. Die Polymerisationstemperatur liegt im allgemeinen im Bereich von 30 bis 120°C, insbesondere 70 bis 100°C.

Bei der Dispersion kann es sich um eine Primärdispersion handeln, d.h. um eine Polymerisatdispersion, die nach der Methode der radikalischen, wäßrigen Emulsionspolymerisation unmittelbar erhalten wurde. Es kann sich auch um eine Sekundärdispersion handeln, d.h. ein durch Lösungspolymerisation erhaltenes Polymerisat wird nachträglich in eine wässrige Polymerdispersion überführt.

Die Trocknung der Polymerisatdispersion kann in üblicher Weise erfolgen, beispielsweise durch Gefriertrocknung oder vorzugsweise durch Sprühtrocknung. Bei einer Sprühtrocknung wird so vorgegangen, dass die Eingangstemperatur des Warmluftstroms im Bereich von 100 bis 200°C, vorzugsweise 120 bis 160°C und die Ausgangstemperatur des Warmluftstroms im Bereich von 30 bis 90°C, vorzugsweise 60 bis 80°C, liegt. Das Versprühen der wässrigen Polymerisatdispersion im Warmluftstrom kann beispielsweise mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wässrige Polymerisatdispersion und der Warmluftstrom werden vorzugsweise parallel geführt.

Die erfindungsgemäß zur Anwendung kommenden Aldehyd-Kondensationsprodukte können der zu trocknenden Dispersion als wässrige Lösung oder als Feststoff vor dem Trocknen zugesetzt werden. Handelt es sich um eine Primärdispersion, kann das Trocknungshilfsmittel vor, während und/oder nach der Emulsionspolymerisation zugegeben werden.

Als erfindungsgemäße C₂-C₆ Aldehyd-Kondensationsprodukte werden beispielsweise Acetaldehyd, Propionaldehyd, Butyraldehyd, Isobutyraldehyd, Glyoxal, Glutaraldehyd, Pentanal oder Hexanal und deren isomeren Verbindungen sowie entsprechende Aldehydgemische mit sulfonierten Phenolen, sulfonierten Naphthalinen sowie anderen sulfonierten mehrkernigen Aromaten eingesetzt.

Unter Phenolen versteht man zum Beispiel Phenol, ortho-Kresol, meta-Kresol, para-Kresol, 2-Ethylphenol, 3-Ethylphenol, 4-Ethylphenol, 2,3-Dimethylphenol, 2,4-Dimethylphenol, 2,5-Dimethylphenol, 2,6-Dimethylphenol, 3,4-Dimethylphenol, 3,5-Dimethylphenol, 3,4,5 Trihydroxybenzoesäure; unter Naphthalinen und Dihydroxyphenylsulfonen versteht man solche, die unsubstituiert, monosubstituiert und mehrfach substituiert sein können. Sofern ein oder mehrere Substituenten vorhanden sind, werden diese unabhängig voneinander gewählt aus zum Beispiel C₁-C₁₀-Alkylgruppen wie beispielsweise Methyl, Ethyl, n-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylexyl, n-Nonyl, n-Decyl oder aus anderen Gruppen wie Hydroxy-, Methoxy-, Ethoxy-, Amin-, Dimethylamin, Ethylmethylamin-, Diethylamin-. Unter den Begriff Phenol werden auch verwandte Verbindungen zum Beispiel Benzol, Toluol, ortho-Xylol, meta-Xylol, para-Xylol, Ethylbenzol, Cumol, para-Methylcumol verstanden. Unter den mehrkernigen Aromaten versteht man beispielsweise Biphenyl, 2-Methylbiphenyl, 3-Methylbiphenyl, 4-Methylbiphenyl, para-Terphenyl, Inden, Fluoren, Phenanthren, Anthracen, 9-Methylanthracen oder 9-Phenyl-anthracen.

Neben den erfindungsgemäßen Trocknungshilfsmitteln können zusätzlich auch bekannte Trocknungshilfsmittel, wie Polyvinylalkohol, Polyvinylpyrrolidon, Homopolymerisate der 2-Acrylamido-2-methylpropansulfonsäure etc., mit verwendet werden. Auch Antibackmittel, wie hochdisperse Kieselsäure, die üblicherweise für die Trocknung von wässrigen Polymerisatdispersionen verwendet werden, können eingesetzt werden, um ein Zusammenbacken des Polymerisatpulvers bei der Lagerung zu verhindern. Bei einer Sprühtrocknung werden die Antibackmittel in der Regel separat zugedüst.

Gegenstand der vorliegenden Erfindung sind auch die erfindungsgemäß erhältlichen Polymerisatpulver. Sie eignen sich als Bindemittel in mineralischen Baustoffen, Anstrichstoffen, Lacken und Klebstoffen und Kunstharzputzen, wie sie in der EP-A 629 650 beschrieben sind, insbesondere aber für mineralische Baustoffe.

Unter mineralischen Baustoffen im Sinne der vorliegenden Erfindung versteht man beispielsweise anorganische, in der Regel mineralische Substanzen, die mit Wasser angemischt zu einem Feststoff erhärten. Hierbei unterscheidet man zwischen Substanzen, die mit Wasser erhärten (latent-hydraulische Bindemittel), z. B. Gips oder gipshaltige Zubereitungen, wie Modell-, Stuck- oder Putzgips, Formgips, Gipsestrich, Sorelzement, Magnesiabindemittel und Weißkalk, sowie hydraulischen Bindemitteln, wie Kalk, Zement oder Mörtel. Der hier verwendete Begriff "Gips" umfasst sowohl Anhydrit als auch Calciumsulfat-Halbhydrat.

In typischer Weise enthalten die Trockenmörtel, bezogen auf die Menge an mineralischem Bindemittel, 0,1 bis 200 Gew.-% modifizierendes Polymerisatpulver.

Zur Verbesserung ihrer Verarbeitungseigenschaften setzt man den Trockenmörteln vielfach Cellulosederivate und Microsilica zu. Calciumcarbonat und Quarzsand bilden in der Regel die übrigen Zuschläge. Durch Zusatz von Entschäumern (unter dem Aspekt "Trockenmörtel" vorzugsweise in Pulverform) kann im verfestigten Zustand ein praxisgerechter Luftporengehalt (1 bis 20 Vol.-%) des verfestigten zementösen Mörtel erreicht werden.

Die nachfolgenden Beispiele erläutern die Erfindung, ohne sie einzuschränken.

### Beispiele

### Dispersion

Ein Gemisch aus
150 g Wasser
5,6 g einer 20 Gew.-%igen wässrigen Lösung eines ethoxylierten p-Isooctylphenols (EO-Grad 25)
0,48 g einer 35 Gew.-%igen wässrigen Lösung eines Na-Salzes eines sulfatierten und ethoxylierten p-Isooctylphenols (EO-Grad 25),
3,9 g einer 10 Gew.-%igen wässrigen Ameisensäure-Lösung,
1,7 g Natriumhydrogencarbonat und
3,4 g einer 20 Gew.-%igen wässrigen Polyacrylamid-Lösung
wurde auf 90°C erhitzt. Anschließend wurden zu diesem Gemisch zeitgleich beginnend und unter Aufrechterhaltung der Innentemperatur von 90°C in 2 h 742,8 g einer wässrigen Monomeremulsion, bestehend aus
291,2 g n-Butylacrylat,
250,0 g Styrol,
11,2 g Acrylamid,
8,4 g einer 20 Gew.-%igen wässrigen Lösung eines ethoxylierten p-Isooctylphenols (EO-Grad 25),
11,5 g einer 20 Gew.-%igen wässrigen Lösung eines Na-Salzes eines sulfatierten und ethoxylierten p-Isooctylphenols (EO-Grad 25) und
162,9 g Wasser
und in 2,5 h eine Lösung von 3,3 g Natriumperoxodisulfat in 90 g Wasser kontinuierlich zugetropft. Danach wurde das Reaktionsgemisch noch 120 min bei 90°C gerührt und auf 60°C abgekühlt. Nach der Zugabe einer Lösung von 1,1 g t-Butylhydroperoxid in 5,5 g Wasser wurde bei dieser Temperatur innerhalb von 1 h eine Lösung von 0,6 g Natriumhydroxymethansulfinat in 15 g Wasser zugegeben und 0,5 h nachgerührt. Nach 15 min kühlte man auf Raumtemperatur ab und neutralisierte mit 3,5 g einer 10 Gew.-% wässrigen Ammoniak-Lösung. Nach Filtration wurde eine Dispersion mit einem Feststoffgehalt von 54,5%, einer Lichtdurchlässigkeit einer 0,01 Gew.-%igen Dispersion bei 20°C und einer Schichtdicke von 2,5 cm (*LD-Wert*) von 9% und einem pH-Wert von 7,3 erhalten. Die Glastemperatur (DSC-midpoint, s.o.) des Polymerisats betrug +15°C. Der Feststoffgehalt der erhaltenen Polymerisatdispersion betrug 58,7%, der LD-Wert 17%, die Tg^{Fox} 7°C und der pH-Wert 7,2.

Herstellung der erfindungsgemäßen und der Vergleichssprühhilfsmittel

### Allgemeine Vorbemerkungen:

Die Molekulargewichtsbestimmungen werden mit Gelpermeationschromatographie (GPC) durchgeführt:
Stationäre Phase: mit Ethylenglykoldimethacrylat vernetztes Poly-(2-hydroxymethacrylat)-Gel, kommerziell erhältlich als HEMA BIO von Fa. PSS, Mainz, Deutschland. Laufmittel: Gemisch aus 30 Gew.-% Tetrahydrofuran (THF), 10 Gew.-% Acrylnitril, 60 Gew.-% 1-molare NaNO₃-Lösung
Interner Standard: 0,001 Gew.-% Benzophenon, bezogen auf Laufmittel
Fluss: 1,5 ml/min
Konzentration: 1 Gew.-% im Laufmittel mit internem Standard
Detektion: UV/Vis-spektrometrisch bei 254 nm
Kalibrierung mit Polystyrol-Eichteils der Fa. PSS.
Mₙ: zahlenmittleres Molekulargewicht in [g/mol]
M_{w}: gewichtsmitteleres Molekulargewicht in [g/mol]

### Sprühhilfsmittel S1

### Reaktanden:

a) Phenol,
b) konzentrierte Schwefelsäure,
c) Glyoxal.

### Vorgehen:

275,40 g Phenol werden in einer Rührapparatur vorgelegt und während 20 Minuten mit 338,6 g konzentrierter Schwefelsäure (96 Gew.-%) versetzt. Dabei wird darauf geachtet, dass die Temperatur 105°C nicht übersteigt. Anschließend wird das Reaktionsgemisch 30 Min. bei 100 bis 105°C gerührt (Sulfonierungsreaktion). Das Reaktionsgemisch wird auf 50°C abgekühlt und unter Einhaltung einer Innentemperatur von 50 bis 55°C portionsweise mit 145,1 g einer 40 Gew.-%igen wässrigen Glyoxallösung innerhalb von 90 Min. versetzt. Nach beendeter Zugabe gibt man sofort 100 g Wasser hinzu, heizt auf 95 bis 100°C auf und lässt 3 Stunden bei dieser Temperatur weiterreagieren (Kondensationsreaktion). Es wird auf 60°C abgekühlt und weitere 162 g Wasser hinzugegeben. Anschließend werden 241 g Calciumhydroxid hinzugegeben, bevor das Gemisch über eine 20-µm-Sieb abfiltriert wird. Der pH-Wert der so erhaltenen wässrigen Lösung beträgt 7,8.

### Sprühhilfsmittel SV1

137,7 g Phenol werden in einer Rührapparatur vorgelegt und während 20 Minuten mit 169,3 g konzentrierter Schwefelsäure (96 Gew.-%) versetzt. Dabei wird darauf geachtet, dass die Temperatur 105°C nicht übersteigt. Anschließend wird das Reaktionsgemisch 30 Min. bei 100 bis 105°C gerührt (Sulfonierungsreaktion). Das Reaktionsgemisch wird auf 50°C abgekühlt und unter Einhaltung einer Innentemperatur von 50 bis 55°C portionsweise mit 100,7 g einer 30 Gew.-%igen wässrigen Formaldehydlösung innerhalb von 4 St. versetzt. Nach beendeter Zugabe gibt man sofort 50 g Wasser hinzu, heizt auf 95 bis 100°C auf und lässt 4 Stunden bei dieser Temperatur weiterreagieren (Kondensationsreaktion). Es wird auf 60°C abgekühlt und weitere 802 g Wasser hinzu gegeben. Anschließend werden 130 g Calciumhydroxid hinzu gegeben, bevor das Gemisch über eine 20-m-Sieb abfiltriert wird. Der pH-Wert der so erhaltenen wässrigen Lösung beträgt 7,9.

| Trocknungshilfsmittel | Mₙ [g/mol] | M_{w} [g/mol] | M_{w}/Mₙ |
|---|---|---|---|
| S1 | 654 | 7480 | 11,4 |
| SV1 | 307 | 4400 | 14,3 |

### Herstellung der erfindungsgemäßen und der Vergleichspolymerisatpulver

Für die Herstellung der trockenen Polymerisatpulver wurden die Polymerisatdispersion auf einen Feststoffgehalt von 45% und das Sprühhilfsmittel mit einem Feststoffgehalt von 30% verdünnt. Dann gab man rasch und unter kräftigem Rühren das Sprühhilfsmittel zur Dispersion. Die Sprühtrocknung erfolgte in einem Minor-Labortrockner der Fa. GEA Wiegand GmbH (Geschäftsbereich Niro) mit Scheiben- oder Zweistoffdüsenzerstäubung bei einer Turmeingangstemperatur von 130°C und einer Turmausgangstemperatur von 60°C (Leistung: ca. 2 kg Sprühspeise/h). Als Antiblockmittel wurde gleichzeitig mit der Sprühspeise ca. 2-3 Gew.% (bezogen auf feste Polymerisat-Mischung) einer feinteiligen Kieselsäure in die Trocknungskammer zudosiert. Mengenverhältnisse, die Trocknungsbedingungen sowie deren Resultate sind in Tabelle 1 zusammengefasst.

Die Redispergierbarkeit der Polymerisatpulver wurde wie nachfolgend beschrieben untersucht:

In eine Glasflasche werden 90 g vollentsalztes Wasser eingewogen und 10 g Pulver zugegeben. Die Mischung wird mit einem Ultra-Turrax 1 min bei 9500 U/min gerührt und in einen Messzylinder gefüllt. Der mit einem Kunststoffstopfen verschloseene Messzylinder wird unbewegt 72h gelagert. Die Redispersion wird anschließend gut geschüttelt und über ein 72 µm-Sieb filtriert. Das Sieb wird 12 h bei 80°C im Trockenschrank gelagert und der prozentuale Anteil der trockenen Koagulats an der eingewogenen Pulvermenge (10g) bestimmt.

**Tabelle 1: Beurteilung der sprühgetrockneten Polymerisatpulver**

| Pulver | Sprühhilfsmittel ^{a)} | Wandbelag | Ausbeute [Gew.-%] | Farbe | Redispergierbarkeit ^{b), c)} |
|---|---|---|---|---|---|
| P1 | 10 S1 | gering | 80 | farblos | 0,1% |
| PV1 | 10 SV1 | gering | 78 | rotbraun | 0,3% |

Gewichtsanteil festes Sprühhilfsmittel, bezogen auf 100 Gewichtsanteil der Dispersion Bei Feststoffgehalt 10% nach 72h

Über ein 72 µm Sieb abfiltriertes Koagulat, getrocknet bei 80°C über Nacht im Vergleich zur redispergierten Pulvermenge

### Test im Normmörtel

Die Polymerisatpulver wurden im Normmörtel auf Färbung und mechanische Festigkeit nach DIN EN 196-1:2005 (B) getestet. Dazu wurde ein Kunststoff zu Zement- Verhältnis von 1:10 gewählt und ein Wasser/ Zement Verhältnis von W/Z = 0,45. Das Polymerisatpulver wurde mit dem Normmörtel (25% Weißzement CEM I 42,5R, 25% Normsand EKI, II, III) gemischt. Nach Anmischen mit Wasser wurden Normprismen der Größe 4 x 4 x 16 cm gegossen. Nach 24 Stunden bzw. 7 Tagen wurde die Biegezugfestigkeit in N/mm² und die Druckfestigkeit in N/mm² bestimmt. Sie sind in Tabelle 2 zusammengefasst.

**Tabelle 2: Prüfung der Polymerisatpulver im Normmörtel**

| Normmörtel + | Biegezugfestigkeit in N/mm² Nach 24 h RT-Lagerung | Druckfestigkeit in N/mm² Nach 24 h RT-Lagerung | Biegezugfestigkeit in N/mm² Nach 7 d RT-Lagerung | Druckfestigkeit in N/mm² Nach 7 d RT-Lagerung | Farbe |
|---|---|---|---|---|---|
| P1 | 2,8 | 8,4 | 5,8 | 20,7 | farblos |
| PV1 | 1,0 | 3,7 | 4,9 | 18,0 | rot |

## Patentansprüche

1. Verwendung von C₂-C₆ Mono- und/oder Dialdehyd-Kondensationsprodukten mit sulfonierten Phenolen, sulfonierten Naphthalinen oder sulfonierten mehrkernigen Aromaten als Hilfsmittel bei der Trocknung wässriger Polymerisatdispersionen für mineralischen Baustoffen.

2. Verwendung gemäß Anspruch 1, wobei das Polymerisat der Dispersion eine Glastemperatur unterhalb 115°C aufweist.

3. Verwendung gemäß einem der Ansprüche 1 oder 2, wobei das Polymerisat
a) 80 bis 100 Gew.-% wenigstens eines Monomers, das ausgewählt ist unter vinylaromatischen Verbindungen, Estern α,β-ungesättigter C₃-C₆-Carbonsäuren oder C₄-C₈-Dicarbonsäuren mit C₁-C₁₂-Alkanolen, Vinyl- oder Allylestern von C₁-C₁₅-Carbonsäuren und Butadien sowie
b) 0 bis 20 Gew.-% wenigstens eines weiteren Monomers, das wenigstens eine ethylenisch ungesättigte Bindung aufweist,
enthalten.

4. Verwendung gemäß einem der Ansprüche 1 bis 3, wobei das Monomer a) ausgewählt ist aus der Gruppe n-Butylacrylat, 2-Ethylhexylacrylat, Methylmethacrylat und/oder Styrol.

5. Verwendung gemäß einem der Ansprüche 1 bis 3, wobei das Monomer b) ausgewählt ist aus der Gruppe (Meth)acrylsäure, (Meth)acrylamid, (Meth)acrylnitril, Acrylamido-2-methylpropansulfonsäure, Vinylpyrrolidon, Hydroxyethyl(meth)acrylat und/oder Hydroxypropyl(meth)acrylat.

6. Verwendung gemäß einem der Ansprüche 1 bis 5, **dadurch gekennzeichnet, dass** der C₂-C₆ Mono- und/oder Dialdehyd ausgewählt ist aus der Gruppe Glyoxal, Glutaraldehyd, Acetaldehyd, Propionaldehyd, Butyraldehyd, Isobutyraldehyd, Pentanal oder Hexanal.

7. Verfahren zur Trocknung von Polymerisatdispersionen, **dadurch gekennzeichnet, dass** man als Trocknungshilfsmittel wenigstens eines des in einem der Ansprüche 1 bis 6 definierten Aldehyd-Kondensationsproduktes verwendet.

8. Verfahren nach Anspruch 7, **dadurch gekennzeichnet, dass** man 1 bis 30 Gew.-%, Trocknungshilfsmittel, bezogen auf das Polymerisat verwendet.

9. Verfahren nach Anspruch 7 oder 8, **dadurch gekennzeichnet, dass** die Trocknung des Polymerisats durch Sprühtrocknung erfolgt.

10. Polymerisatpulver, erhältlich durch ein Verfahren gemäß einem der Ansprüche 7 bis 9.

11. Verwendung des Polymerisatpulvers nach Anspruch 10 als Bindemittel in hydraulisch abbindenden Massen, Anstrichstoffen, Lacken, Klebstoffen, Beschichtungsmassen und Kunstharzputzen sowie zur Modifizierung von mineralischen Baustoffen.

12. Mineralische Bindebaustoffe, enthaltend ein Polymerisatpulver gemäß Anspruch 10.

13. Mineralische Bindebaustoffe nach Anspruch 12 in Form einer Trockenmörtelzubereitung, bestehend aus
20 bis 60 Gew.-% mineralischem Bindemittel,
0,1 bis 25 Gew.-% Polymerisatpulver gemäß Anspruch 10,
bis zu 25 Gew.-% üblichen Hilfsmitteln und
als Restmenge Zuschläge wie Sand, Füllstoffe, Pigmente, natürliche Fasern und/oder synthetische Fasern.

## Claims

1. The use of C₂-C₆-mono- and/or dialdehyde condensates with sulfonated phenols, sulfonated naphthalenes or sulfonated polynuclear aromatics as aids in the drying of aqueous polymer dispersions for mineral building materials.

2. The use according to claim 1, the polymer of the dispersion having a glass transition temperature below 115°C.

3. The use according to either of claims 1 and 2, the polymer comprising
a) from 80 to 100% by weight of at least one monomer which is selected from vinylaromatic compounds, esters of α,β-unsaturated C₃-C₆-carboxylic acids or C₄-C₈-dicarboxylic acids with C₁-C₁₂-alkanols, vinyl or allyl esters of C₁-C₁₅-carboxylic acids and butadiene and
b) from 0 to 20% by weight of at least one further monomer which has at least one ethylenically unsaturated bond.

4. The use according to any of claims 1 to 3, the monomer a) being selected from the group consisting of n-butyl acrylate, 2-ethylhexyl acrylate, methyl methacrylate and/or styrene.

5. The use according to any of claims 1 to 3, the monomer b) being selected from the group consisting of (meth)acrylic acid, (meth)acrylamide, (meth)acrylonitrile, acrylamido-2-methylpropanesulfonic acid, vinylpyrrolidone, hydroxyethyl (meth)acrylate and/or hydroxypropyl (meth)acrylate.

6. The use according to any of claims 1 to 5, wherein the C₂-C₆-mono- and/or dialdehyde is selected from the group consisting of glyoxal, glutaraldehyde, acetaldehyde, propionaldehyde, butyraldehyde, isobutyraldehyde, pentanal or hexanal.

7. A process for drying polymer dispersions, wherein the drying aid used is at least one of the aldehyde condensates defined in any of claims 1 to 6.

8. The process according to claim 7, wherein from 1 to 30% by weight of drying aid, based on the polymer, are used.

9. The process according to claim 7 or 8, wherein the drying of the polymer is effected by spray drying.

10. A polymer powder obtainable by a process according to any of claims 7 to 9.

11. The use of the polymer powder according to claim 10 as a binder in hydraulically setting materials, paints, finishes, adhesives, coating materials and synthetic resin renders or for modifying mineral building materials.

12. A mineral binding building material comprising a polymer powder according to claim 10.

13. The mineral binding building material according to claim 12 in the form of a dry mortar formulation consisting of
from 20 to 60% by weight of mineral binder,
from 0.1 to 25% by weight of polymer powder according to claim 10,
up to 25% by weight of customary assistants and
additives, such as sand, fillers, pigments, natural fibers and/or synthetic fibers, as the remaining amount.

## Revendications

1. Utilisation de produits de condensation d'un mono- et/ou dialdéhyde en C₂-C₆ avec des phénols sulfonés, des naphtalines sulfonées ou des composés aromatiques polynucléaires sulfonés en tant qu'adjuvants lors du séchage de dispersions aqueuses de polymère pour matériaux de construction minéraux.

2. Utilisation selon la revendication 1, dans laquelle le polymère de la dispersion présente une température de transition vitreuse inférieure à 115 °C.

3. Utilisation selon l'une quelconque des revendications 1 ou 2, dans lequel le polymère contient a) 80 à 100 % en poids d'au moins un monomère choisi parmi les composés aromatiques de vinyle, les esters d'acides carboxyliques en C₃-C₆ ou d'acides dicarboxyliques en C₄-C₈ α,β-insaturés avec des alcanols en C₁-C₁₂, les esters vinyliques ou allyliques d'acides carboxyliques en C₁-C₁₅ et de butadiène, ainsi que b) 0 à 20 % en poids d'au moins un monomère supplémentaire, qui comprend au moins une liaison éthyléniquement insaturée.

4. Utilisation selon l'une quelconque des revendications 1 à 3, dans laquelle le monomère a) est choisi dans le groupe constitué par l'acrylate de n-butyle, l'acrylate de 2-éthylhexyle, le méthacrylate de méthyle et/ou le styrène.

5. Utilisation selon l'une quelconque des revendications 1 à 3, dans laquelle le monomère b) est choisi dans le groupe constitué par l'acide (méth)acrylique, le (méth)acrylamide, le (méth)acrylonitrile, l'acide acrylamido-2-méthylpropanesulfonique, la vinylpyrrolidone, le (méth)acrylate d'hydroxyéthyle et/ou le (méth)acrylate d'hydroxypropyle.

6. Utilisation selon l'une quelconque des revendications 1 à 5, **caractérisée en ce que** le mono- et/ou dialdéhyde en C₂-C₆ est choisi dans le groupe constitué par le glyoxal, le glutaraldéhyde, l'acétaldéhyde, le propionaldéhyde, le butyraldéhyde, l'isobutyraldéhyde, le pentanal ou l'hexanal.

7. Procédé de séchage de dispersions de polymère, **caractérisé en ce qu'**au moins un produit de condensation d'un aldéhyde défini dans l'une quelconque des revendications 1 à 6 est utilisé en tant qu'adjuvant de séchage.

8. Procédé selon la revendication 7, **caractérisé en ce que** 1 à 30 % en poids d'adjuvant de séchage est utilisé par rapport au polymère.

9. Procédé selon la revendication 7 ou 8, **caractérisé en ce que** le séchage du polymère a lieu par séchage par pulvérisation.

10. Poudre de polymère, pouvant être obtenue par un procédé selon l'une quelconque des revendications 7 à 9.

11. Utilisation de la poudre de polymère selon la revendication 10 en tant que liant dans des matériaux à prise hydraulique, des peintures, des laques, des adhésifs, des matériaux de revêtement et des enduits en résine synthétique, ainsi que pour la modification de matériaux de construction minéraux.

12. Matériaux de construction liants minéraux, contenant une poudre de polymère selon la revendication 10.

13. Matériaux de construction liants minéraux selon la revendication 12, sous la forme d'une préparation de mortier sèche, constituée par :
20 à 60 % en poids d'un liant minéral,
0,1 à 25 % en poids d'une poudre de polymère selon la revendication 10,
jusqu'à 25 % en poids d'adjuvants usuels,
le reste étant des additifs tels que du sable, des charges, des pigments, des fibres naturelles et/ou des fibres synthétiques.
